# EUROPEAN PATENT SPECIFICATION

(11) **EP 3 463 800 B1**
(45) Date of publication and mention of the grant of the patent: **20.08.2025**
(21) Application number: 17731293.1
(22) Date of filing: 30.05.2017
(51) Int. Cl.: B29C 48/27, B29C 48/82, B29B 13/04, B29B 13/02, B29C 43/02

(54) **METHOD AND APPARATUS FOR PRODUCING OBJECTS MADE OF POLYMERIC MATERIAL**
VERFAHREN UND VORRICHTUNG ZUR HERSTELLUNG VON GEGENSTÄNDEN AUS POLYMERMATERIAL
PROCÉDÉ ET APPAREIL DE PRODUCTION D'OBJETS EN MATÉRIAU POLYMÈRE

(30) Priority: 30.05.2016 IT UA20163918
(43) Date of publication of application: 10.04.2019
(73) Proprietor: Sacmi Cooperativa Meccanici Imola Societa' Cooperativa, 40026 Imola (BO) (IT)
(72) Inventor: PARRINELLO, Fiorenzo, 40059 Medicina (Bologna) (IT); PUCCI, Fabrizio, 40023 Castel Guelfo di Bologna (Bologna) (IT)
(74) Representative: Colò, Chiara
(86) International application number: PCT/IB2017/053166
(87) International publication number: WO 2017/208143

(56) References cited:
- EP-A1- 0 807 011
- EP-A1- 2 266 777
- EP-A1- 2 918 388
- EP-A2- 2 447 037
- EP-B1- 1 265 736
- WO-A1-2008/097880
- WO-A1-2010/072361
- WO-A2-01/66327
- WO-A2-2008/064140
- CN-U- 202 114 890
- GB-A- 1 423 788
- US-A- 4 305 902
- US-A1- 2007 001 339
- US-A1- 2008 268 141
- US-A1- 2014 239 530

## Description

The invention relates to a method and an apparatus for producing objects made of polymeric material, particularly by means of compression moulding.

The objects that can be produced by means of the method and the apparatus according to the invention can for example comprise caps for containers, preforms for obtaining containers by means of blow moulding or stretch blow moulding, or containers.

The polymeric material that can be processed by means of the method and the apparatus according to the invention can be any material usable in compression moulding, in particular a semi-crystalline material such as polypropylene (PP), high-density polyethylene (HOPE) or polyethylene terephthalate (PET). More generally, the method and the apparatus according to the invention can be used for processing any polymeric material that has a melting temperature higher than its crystallization temperature and/or glass transition temperature.

Conventionally, the objects obtained by compression moulding semi-crystalline polymeric materials are produced by inserting, into a mould, a dose of polymeric material having a temperature higher than the respective melting temperature. The dose is shaped between a male element and a female element of the mould so as to obtain the desired object, which is then cooled inside the mould and finally extracted from the latter.

EP 1265736 discloses a method for producing an object by compression moulding a semi-crystalline polymeric material, in which the polymeric material is heated, inside an extruder, until the polymeric material reaches a temperature higher than the respective melting temperature. Subsequently, the polymeric material is cooled to a working temperature lower than the melting temperature, but higher than a crystallization starting temperature, at which crystallization starts during cooling. From the polymeric material thus cooled, doses are obtained having a preestablished mass. These doses are introduced into respective moulds in which they are shaped between a male element and a female element. While the polymeric material is being shaped in the mould, its temperature is maintained at a value close to the crystallization starting temperature. Subsequently, the object obtained by shaping the polymeric material is cooled and then extracted from the mould.

The method disclosed in EP 1265736 allows the cycle time to be reduced if compared with the conventional methods in which the dose was introduced inside the mould at a temperature higher than the melting temperature. By introducing the dose of polymeric material in the mould at a working temperature that is lower than the melting temperature, but a little higher than the crystallization starting temperature, there is a reduction in the time required for cooling the moulded object from the working temperature to a temperature at which the moulded object can be extracted from the mould without being damaged.

Nevertheless, the method disclosed in EP 1265736 can be further improved, above all with regard to the energy efficiency of the apparatus used for carrying out such method.

Further examples of prior art apparatuses are disclosed in US 2008/268141 A1, GB 1 423 788 A, EP 2447037,

WO 2008/064140, WO 2010/072361, US 2007/001339 and EP 2918388. An object of the invention is to improve the methods and the apparatuses for producing objects, in particular by compression moulding doses of polymeric material, especially semi-crystalline thermoplastic material.

A further object is to increase the energy efficiency of the methods and of the apparatuses for producing objects, in particular by compression moulding doses of polymeric material, especially semi-crystalline thermoplastic material.

Another object is to provide a method and an apparatus that allow speeding up the production of objects made of polymeric material particularly by means of compression moulding, while simultaneously ensuring an energy savings with respect to the state of the art.

In a first aspect of the invention, there is provided an apparatus according to claim 1 for producing an object from a polymeric material.

The heat recovery device allows at least part of the heat released by the melted polymeric material to the heat exchanger to be made available for further use, thus preventing this part of heat from being dispersed in the environment. Thus, it is possible to obtain an apparatus having high energy efficiency.

In other words, advantage is taken of the fact that the polymeric material is cooled between the melting device and the mould, in order to at least partly recover the heat released by the polymeric material, so that the recovered heat can be addressed to other uses.

In addition, the apparatus according to the first aspect of the invention allows productivity to be considerably increased with respect to the known apparatuses. In particular, the time necessary for producing an object made of polymeric material by shaping the polymeric material inside the mould, is drastically reduced with respect to the state of the art.

Indeed, by inserting the polymeric material in the mould at a temperature lower than the melting temperature, there is a decrease in the time required for cooling the formed object to a temperature at which it can be handled and then extracted from the mould without undergoing damage. Hence, there is a reduction of the cycle time.

In an embodiment, the heat recovery device is configured to make the recovered heat available for further use in said apparatus.

In this manner, it is possible to decrease the amount of energy that must be supplied to the apparatus from the outside for allowing the apparatus to work properly.

In an embodiment, the heat recovery device is connected with a preheating device for preheating granules of said polymeric material upstream of the melting device.

In this manner, there is a reduction in the energy that must be supplied to the melting device in order that the melting device can melt the polymeric material. Indeed, the melting device receives the granules of polymeric material at a temperature higher than the ambient temperature, which implies a reduction in the heat that must be supplied to the granules in order to bring them to the melting point.

In an embodiment, the heat recovery device is connected to the melting device so as to release heat directly to the melting device.

Also in this case, the energy that needs to be supplied from outside the apparatus to the melting device is decreased, since a part of the heat required for melting the polymeric material in the melting device is recovered from the heat that the melted polymeric material releases to the heat exchanger.

In an embodiment, the mould is configured to compression mould the object from a dose of the polymeric material.

In particular, the apparatus can comprise a severing element for severing a dose of polymeric material from a flow of polymeric material coming from the heat exchanger.

In a second aspect of the invention, there is provided a method according to claim 9 for producing an object from a polymeric material.

The method provided by the second aspect of the invention allows to obtain the advantages, in terms of energy efficiency and decrease of cycle time, that have been described above with reference to the apparatus according to the first aspect of the invention.

The invention can be better understood and carried out with reference to the enclosed drawings, which illustrate an exemplifying and non-limiting embodiment thereof, in which:
Figure 1 is a schematic view of an apparatus for producing objects by compression moulding;
Figure 2 is a graph that shows how crystallization of a particular type of polypropylene varies as a function of time;
Figure 3 is a graph that shows, for the polypropylene of Figure 2, how the percentage of crystallized mass varies as a function of time;
Figure 4 is a graph that shows, for the polypropylene of Figure 2, how the time necessary for obtaining crystallization of 50% of the mass of material varies as a function of temperature;
Figure 5 is a graph that schematically shows how the temperature of a polymeric material varies, in the apparatus of Figure 1, as a function of time.

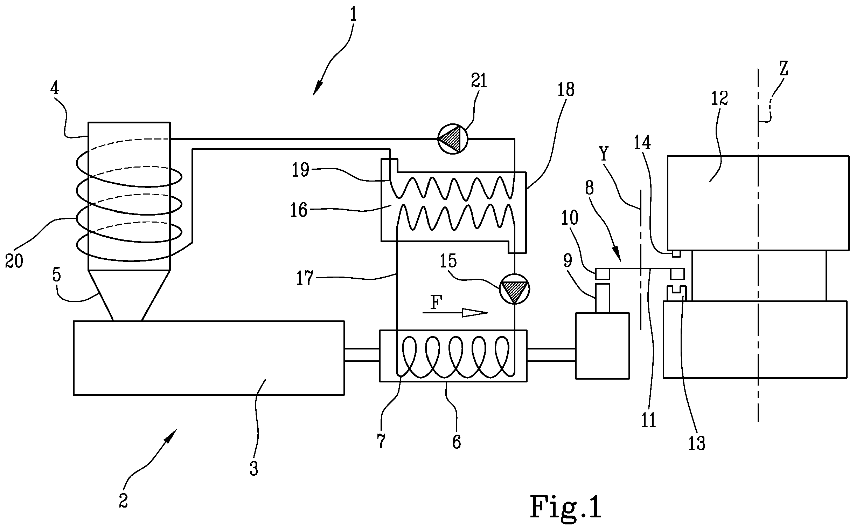

Figure 1 shows an apparatus 1 for producing an object by compression moulding a dose of polymeric material.

The object produced by means of the apparatus 1 can be a cap for a container, or a container, or a preform for obtaining a container by means of blow moulding or stretch blow moulding, or more generally any object with a concave or flat shape.

The polymeric material used by the apparatus 1 can be any polymeric material that can be compression moulded, in particular a semi-crystalline material such as polypropylene (PP), high-density polyethylene (HDPE) or polyethylene terephthalate (PET).

Semi-crystalline materials are materials that exhibit, in their solid state, a fraction of crystalline mass and a fraction of amorphous mass.

For semi-crystalline polymeric materials, a melting temperature T_{F} and a crystallization temperature Tc may be defined.

In particular, the melting temperature T_{F} is the temperature at which a polymeric material which is heated, passes from solid state to melted state.

The crystallization temperature T_{C} is the temperature at which a fraction of material crystallizes during cooling. The crystallization temperature Tc is lower than the melting temperature T_{F}.

To be more precise, the crystallization process does not occur at a specific temperature, but within a temperature range which is defined between a crystallization starting temperature Tic and a crystallization ending temperature T_{FC}.

Furthermore, the crystallization temperature Tc, as well as the difference existing between the crystallization starting temperature Tic and the crystallization ending temperature T_{FC}, are not constant for a given material, but depend on the conditions according to which the material is cooled. In particular, the lower is the temperature at which the melted polymeric material is maintained, the faster crystallization thereof takes place. Moreover, the more quickly the melted polymeric material is handled, the more the temperature range at which crystallization occurs lowers.

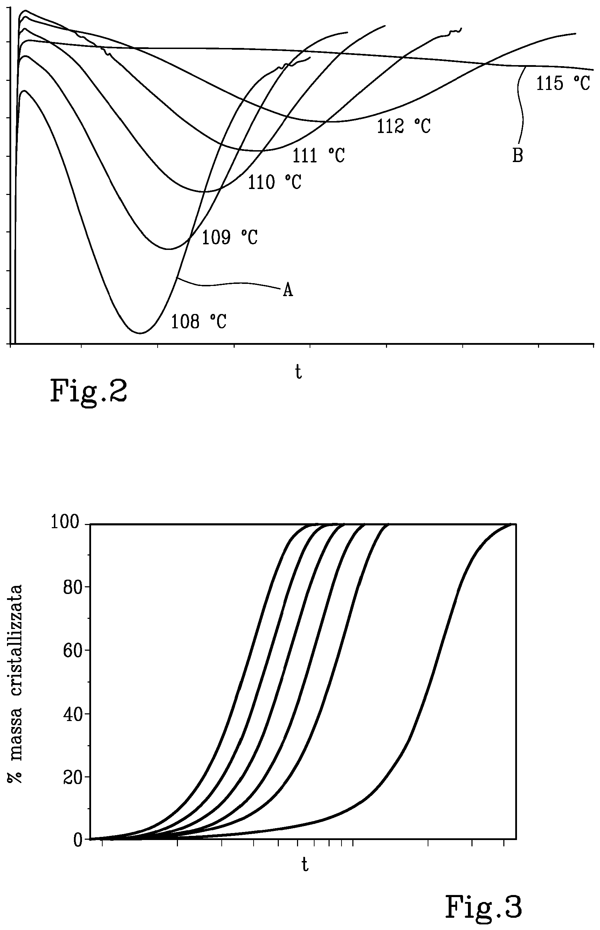

This is confirmed by Figure 2, which shows the results of an analysis carried out by differential scanning calorimetry (DSC) on polypropylene samples. The material samples analyzed were brought to a temperature higher than the melting temperature, at which temperature the samples were kept for a few minutes so as to melt all the crystals present therein. The samples were then cooled down to a pre-determined temperature and maintained at such temperature for the time necessary for each sample to be crystallized. Thus, crystallization times and modes were tested for each sample.

Figure 2 shows the energy released by the samples analyzed as a function of time, during the crystallization step.

In particular, the curve indicated by A refers to the sample which was cooled to the lowest temperature, namely 108°C. In this sample, the crystallization has occurred in a shorter time and within a lower temperature range than the other samples analyzed. Curve A exhibits an exothermic crystallization peak which is the narrowest one among all the samples analyzed. This means that the difference between the crystallization starting temperature T_{IC} and the crystallization ending temperature T_{FC} for that sample, is minimum with respect to all other samples analyzed.

The curve referred to with B is instead relative to the sample which was cooled to the highest temperature, i.e. to a temperature of 115°C. In this sample the crystallization process did not occur, because the high temperature at which the sample was maintained did not allow crystals to be formed during the period of time in which the sample was observed. This proves that the polymeric material crystallizes faster if a lower temperature is maintained.

A similar reasoning applies to the melting process and related melting temperature.

Figure 3, based on data obtained from Figure 2, shows how the crystallized mass percentage varies in a sample as a function of time. Each curve refers to a different temperature down to which the sample was cooled, after which the sample temperature was kept constant. In particular, the temperature of each sample increases by moving from left to right in the graph. It is noted that, the lower is the temperature at which the sample is cooled, the more is reduced the time required for a 100% crystallization of the sample mass to occur.

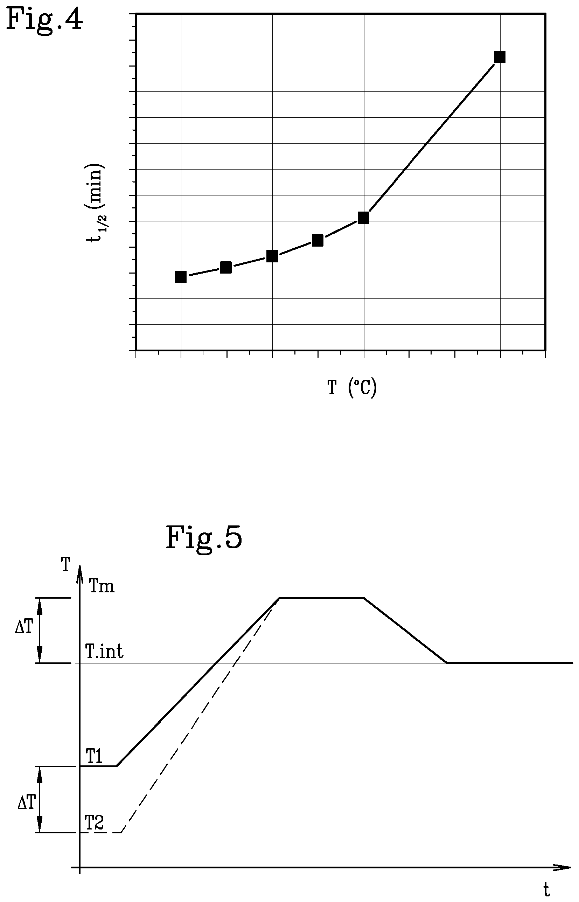

A half-crystallization time t_{1/2} can be defined, which is the time needed by a sample to have half of the mass thereof crystallized. Figure 4, based on data from Figures 2 and 3, shows the half-crystallization time t_{1/2} as a function of temperature at which the sample was maintained. It is noted that, upon increasing of the temperature at which the sample was maintained, the half-crystallization time t_{1/2} increases.

In summary, the behaviour of a semi-crystalline polymer during melting and crystallization thereof cannot be univocally determined, but is affected by the cooling conditions, following which the polymer is cooled. In particular, the lower is the temperature at which the molten polymer material is kept, the faster crystallization takes place.

The above considerations derive from studies concerning behavior of semi-crystalline polymeric materials which were carried out under static conditions, that is to say, while the sample analyzed was not undergoing any deformation. Crystallization occurring under these conditions is called quiescent crystallization.

Nevertheless, when a semi-crystalline polymeric material is subject to deformation, as it happens when the polymeric material is handled in a machine, for example for being subjected to compression moulding, a phenomenon occurs called Flow Induced Crystallization. While the material flows, anisotropic crystallites are formed which are oriented in the flow direction, and this modifies the crystallization kinetics of the material with respect to the condition under which the only quiescent crystallization occurs.

When a polymeric material is cooled below the melting temperature T_{F} and at same time it is deformed, the quiescent crystallization and the flow induced crystallization combine, thus causing a globally faster crystallization of the material.

It was noted that, by displacing fast a molten polymeric material, the crystallization temperature thereof decreases and the temperature range within which crystallization takes place narrows. This is due to the fact that, by keeping the molten polymeric material in an agitated state, the polymeric chains of the polymeric material have less capability of organizing and solidifying in an ordered configuration.

The phenomena described hereinabove can be used to improve compression moulding of a semi-crystalline polymer, particularly in an apparatus 1 of the type shown in Figure 1.

The apparatus 1 comprises a melting device 2, which can comprise an extruder device 3, suitable for melting and extruding the polymeric material.

Upstream of the melting device 2, a feeding container 4 is provided, the feeding container 4 being suitable for containing a quantity of granules of the polymeric material to be processed in order to continuously feed the melting device 2. In particular, the feeding container 4 can be connected to the melting device 2 by means of a hopper 5. In this case the granules of polymeric material descend from the feeding container 4 into the hopper 5 and from here into the melting device 2.

In the melting device 2, the polymeric material is heated until reaching a temperature T_{M} higher than or equal to the melting temperature T_{F}. The polymeric material in this manner passes from the granular solid state to the melted state.

Downstream of the melting device 2, a cooling zone is provided which, in the depicted example, is defined inside a heat exchanger 6. The cooling zone is configured to cool the flow of polymeric material coming from the melting device 2 to an intermediate temperature T_{INT} lower than the melting temperature T_{F}, but higher than the crystallization temperature Tc. The heat exchanger 6 can comprise a static mixer. The latter can comprise a conduit through which the polymeric material passes, in which a mixing element is arranged.

The mixing element comprises a plurality of diverting bars arranged in a stationary position for homogenizing the flow of polymeric material, both from the thermal viewpoint and, where appropriate, from the composition viewpoint. In particular, the diverting bars may divide the main flow of polymeric material into a plurality of secondary flows which mix with one another along their path inside the static mixer.

The heat exchanger 6 can be associated with a circuit 17, in which a conditioning fluid circulates, e.g. diathermic oil, water, steam or other, in order to control temperature of the flow of polymeric material downstream of the melting device 2.

More in detail, the circuit 17 in which the conditioning fluid circulates can comprise a coil 7, which surrounds the conduit in which the polymeric material passes when it flows through the heat exchanger 6.

In the depicted example, the exchanger 6 is a counter-current heat exchanger. In other words, the conditioning fluid enters into the coil 7 at a point arranged downstream of a further point from which the conditioning fluid exits from the coil 7, with respect to an advancement direction F according to which the polymeric material advances inside the heat exchanger 6.

Along the circuit 17 in which the conditioning fluid of the heat exchanger 6 circulates, a pump 15 can be provided for moving the conditioning fluid in the desired direction.

The apparatus 1 further comprises a heat recovery device 16 configured to cooperate with the heat exchanger 6. The heat recovery device 16 is configured to recover at least part of the heat released by the melted polymeric material to the heat exchanger 6, so that the recovered heat can be made available for further use.

In particular, the heat recovered by the heat recovery device 16 can be reused in the same apparatus 1 in which the heat recovery device 16 is inserted, so as to decrease the amount of energy that must be provided from the outside in order to enable operation of the apparatus 1.

The heat recovery device 16 can be conformed as a recovery heat exchanger for removing heat from the conditioning fluid circulating in the circuit 17 associated with the heat exchanger 6. Such conditioning fluid, which has cooled the polymeric material coming from the melting device 2, is at a relatively high temperature and can heat a heat recuperator fluid circulating in the heat recovery device 16.

The heat recovery device 16 can for example comprise a casing 18 which houses a recovery circuit 19. Within the casing 18, a portion of the circuit 17 associated with the heat exchanger 6 is also arranged. The circuit 17 and the recovery circuit 19 can face each other, e.g. near respective coils, or in any case be arranged close to each other, so as to allow passage of heat from the conditioning fluid circulating in the circuit 17 to the heat recuperator fluid circulating in the heat recovery device 16.

In this manner, the heat recovery device 16 allows to recover, from the heat exchanger 6, heat which would otherwise be lost, consequently increasing the energy efficiency of the apparatus 1.

In the example shown in Figure 1, the heat recovery device 16 is connected with a preheating device 20 for preheating the polymeric material intended to enter into the melting device 2, e.g. for preheating the granules that are present in the feeding container 4. To this end, the preheating device 20 can be conformed as a winding that encloses a lateral wall of the feeding container 4. Such winding is connected to the recovery circuit 19, such that the heat recovered in the heat recovery device 16 can be transferred to the preheating device 20.

A further pump 21 can be provided for moving, towards the feeding container 4, the heat recovery fluid that was heated by the conditioning fluid associated with the heat exchanger 6.

The apparatus 1 further comprises a severing device 8 for severing dosed quantities or doses of polymeric material from the flow of polymeric material coming from the heat exchanger 6.

In particular, the severing device 8 allows the doses to be severed from the flow of polymeric material which exits from a nozzle 9 arranged downstream of the heat exchanger 6. In the depicted example, the nozzle 9 is directed upward. In particular, the nozzle 9 can be configured in a manner such that the flow of polymeric material that exits from the nozzle 9 is directed along a vertical direction.

Other arrangements of the nozzle 9 are also possible, however.

The severing device 8 can comprise at least one collecting element 10, e.g. shaped as a concave element extending around a vertical axis, suitable for passing near the nozzle 9, particularly above the latter, in order to sever a dose of polymeric material therefrom. The collecting element 10 therefore acts as a severing element for severing the dose from the flow of polymeric material exiting from the nozzle 9. The dose remains attached to the collecting element 10, which carries the dose towards a mould in which the dose can be shaped so to obtain the desired object.

The collecting element 10 is rotatable around a rotation axis Y, particularly vertical. To this end, a plurality of collecting elements 10 can be provided, supported by a carousel structure 11.

The mould is arranged downstream of the heat exchanger 6.

The mould can comprise a female element 13 and a male element 14. The male element 14 can be arranged above the female element 13, and be aligned with the latter along a vertical axis. Nevertheless, other mutual arrangements are possible for the female element 13 and the male element 14.

The apparatus 1 can comprise a plurality of moulds arranged in a peripheral region of a moulding carousel 12. The moulding carousel 12 can be rotatable around a vertical axis Z.

The apparatus 1 comprises a movement device for moving the female element 13 and the male element 14 towards each other and alternatively moving the female element 13 and the male element 14 away from each other. In particular, the movement device is configured to move the female element 13 and the male element 14 with respect to each other between an open configuration, in which the female element 13 and the male element 14 are spaced apart from each other, and a forming configuration, in which a forming chamber is defined between the female element 13 and the male element 14, the forming chamber having a shape corresponding to the object that it is desired to obtain.

The movement device can be associated only with the female element 13, so as to move the female element 13 with respect to the male element 14 that is instead maintained in a stationary position. It is also possible to associate the movement device with the male element 14, which is thus moved with respect to the female element 13, which is instead maintained stationary.

Alternatively, the movement device can simultaneously act on the male element 14 and on the female element 13, which are both moved.

The movement device can for example be of mechanical or hydraulic type. An example of a mechanical movement device is a cam device, while an example of a hydraulic movement device is a hydraulic actuator.

In any case, the movement device is configured to move the male element 14 and the female element 13 with respect to each other along a moulding direction which, in the depicted example, is vertical.

The collecting element 10 is, as stated above, movable around the rotation axis Y. In particular, the collecting element 10 can be in a collecting position, in which the collecting element 10 is located above the nozzle 9 to remove a dose of polymeric material therefrom. The dose, due to its highly viscous fluid state, remains adherent to the collecting element 10 which, while rotating around the rotation axis Y, carries the dose towards the mould. The collecting element 10 can also be n a delivery position in which it is arranged above the female element 13, so as to release - e.g. with the aid of pneumatic or mechanical means - the dose of polymeric material inside a cavity of the female element 13.

The portion of the apparatus 1 interposed between the heat exchanger 6 and an outlet mouth of the nozzle 9 is thermally conditioned, such that the temperature of the polymeric material that flows through it remains, at its interior, at a controlled value below the melting temperature T_{F}, for example at an intermediate value T_{INT} between the melting temperature T_{F} and the crystallization starting temperature Tic.

The apparatus 1 can comprise an accelerator device for accelerating the flow of polymeric material coming from the melting device 2. In the depicted example, the nozzle 9 acts as an accelerator device, since it is provided with passage sections for the polymeric material which progressively decrease in the advancement direction F, so as to accelerate the flow of polymeric material that passes inside.

Alternatively, or in combination with was stated above, a conduit within which the polymeric material passes before reaching the nozzle 9 can also act as accelerator device, if its internal sections are suitably sized for accelerating the flow of polymeric material.

In a non-depicted version, a different accelerator device may be provided, which can be arranged in any point between the heat exchanger 6 and the nozzle 9.

During operation, as shown in Figure 5, the granules of polymeric material are heated at a preheating temperature T₁ by the preheating device 20, while the granules are located inside the feeding container 4. The preheating temperature T₁ is higher than the ambient temperature.

From the feeding container 4, passing through the hopper 5 (if present), the preheated granules enter into the melting device 2, which heats the granules until they reach temperature T_{M}, higher than or equal to the melting temperature T_{F}. The granules are maintained at such temperature for a time sufficient to cause melting thereof, after which the melted polymeric material is extruded and sent into the heat exchanger 6. Here, the melted polymeric material is cooled to the temperature T_{INT}, which as stated above is comprised between the melting temperature T_{F} and the crystallization temperature Tc. More specifically, the temperature T_{INT} is higher than the crystallization starting temperature Tic.

Subsequently, the polymeric material coming from the heat exchanger 6 reaches the nozzle 9, from which a flow of polymeric material exits; the severing device 8 severs a dose from the flow of polymeric material.

In the nozzle 9, and possibly also in a portion of the apparatus 1 comprised between the heat exchanger 6 and the nozzle 9, the flow of polymeric material is accelerated, so that the flow reaches an average speed higher than the average speed that it had in the heat exchanger 6. The dose that the severing device 8 has severed is carried by a corresponding collecting element 10, until the dose arrives above a female element 13 of a mould.

In this moment, the mould is in the open configuration, in which the female element 13 is spaced apart from the male element 14.

The collecting element 10 can therefore be interposed between the female element 13 and the male element 14 and release the dose into the female element 13.

When the collecting element 10 is above the female element 13, the dose is detached from the collecting element 10 and deposited in the cavity of the female element 13. The female element 13 and the male element 14 move towards each other due to the movement device, until a forming configuration is reached, in which the forming chamber defined between the male element 14 and the female element 13 has a shape corresponding to the shape of the object to be obtained. At this point, the female element 13 and the male element 14 are maintained in the reached mutual position in order to allow the object to be crystallized, so that the object may reach a sufficient strength which allows the object to be extracted from the mould without undergoing damage.

At the end of the forming step, the mould is opened, by moving the male element 14 and the female element 13 away from each other. The formed object is removed from the mould and a new forming cycle can start.

The dose is introduced in the mould at a working temperature T_{LAV} lower than the melting temperature T_{F} of the constituent polymeric material, but higher than the crystallization starting temperature Tic at which, in static conditions, crystals would start to form. The working temperature T_{LAV} can be equal to the intermediate temperature T_{INT} or lower than the latter.

While the polymeric material that constitutes the dose is shaped between the female element 13 and the male element 14 of the mould, its temperature is maintained higher than the crystallization starting temperature Tic.

This does not mean that the temperature of the female element 13 and of the male element 14 of the mould is also higher than the crystallization starting temperature Tic. The female element 13 and the male element 14 can be provided with respective cooling circuits, a cooling fluid circulating within each of these circuits. Even if the temperature of the polymeric material that is shaped is higher than the crystallization starting temperature Tic, the temperature of the cooling fluid, like that of the respective mould elements, can be lower than the crystallization starting temperature Tic, even significantly lower.

When the compression-moulded object has reached its substantially definitive form, the object is cooled below its crystallization temperature Tc. The object can be cooled with a cooling speed greater than 3.5°C/s, so that solidification occurs as quickly as possible.

Inserting the dose in the mould at a temperature lower than the melting temperature T_{F} allows a reduction in the time necessary for cooling the compression-moulded object to a temperature at which the moulded object can be extracted from the mould and handled without being significantly deformed.

In addition, subjecting the flow of polymeric material to high speeds, upstream of the mould and/or inside the mould, allows increasing the deformation speed of the polymeric material and hence accelerating the crystallization kinetics, since in addition to the quiescent crystallization that would occur in static conditions there is also the flow induced crystallization.

Inside the melting device 2, the polymeric material is supplied with an amount of heat sufficient for heating the polymeric material from the temperature T₁ to the temperature T_{M}. Indeed, the polymeric material is brought from the ambient temperature to the temperature T₁ by the preheating device 20, which exploits the heat that the heat recovery device 16 has recovered from the heat exchanger 6.

If the heat recovery device 16 were not present, the other conditions being the same, the polymeric material would enter into the melting device at a temperature T₂ lower than the temperature T₁. For example, temperature T₂ could be equal to the ambient temperature. The melting device 2 would therefore heat the polymeric material from the temperature T₂ to the temperature T_{M}, with a consequent greater energy consumption. Assuming - for the sake of simplicity - that the heat losses inside the apparatus 1 are negligible, the difference ΔT between the temperature T_{M} and the intermediate temperature T_{INT} is about equal to the difference ΔT between the temperature T₁ and the temperature T₂. In other words, still assuming that the heat losses can be ignored, the heat released by the polymeric material to the heat recovery device 16 in the heat exchanger 6 corresponds to the heat savings can be obtained in the melting device 2, by preheating the polymeric material by means of the preheating device 20 connected to the heat recovery device 16.

This allows to obtain a reduction in the amount of energy that must be supplied, from outside, to the apparatus 1.

The preheating device 20 can use, for preheating the granules of polymeric material, a preheating fluid in the liquid state, or a preheating fluid in the gaseous state, e.g. in the form of heated air. The preheating fluid used by the preheating device 20 in any case receives heat from the heat recovery device 16.

In a non-depicted version, the heat recovery device 16 can be configured to release the recovered heat directly to the melting device 2, instead of releasing the recovered heat to the preheating device 20. In this case, the heat recovered owing to the heat recovery device 16 is used for assisting heating of the polymeric material in the melting device 2. This still allows to save the quantity of energy that, from the outside, must be supplied to the apparatus 1.

It is also possible to optimize the energy efficiency of the apparatus 1 by improving the thermal insulation thereof and optimizing the insulation. For example, the melting device 2 could be inserted inside a thermally insulated containment casing in order to reduce heat dissipation. Also the heat exchanger 6, and/or the heat recovery device 16, and/or the preheating device 20 could be inserted inside the abovementioned containment casing.

In an alternative embodiment, the heat recovery device 16 can be associated with a cogeneration device. The cogeneration device can for example be of the type operating with methane gas.

In a further embodiment, the heat recovery device 16 can be connected to, inserted in, or in any case associated with a heat pump.

In the preceding description, reference was made to a heat exchanger 6 comprising a static mixer.

Nevertheless, this condition is not necessary.

Indeed, the heat exchanger 6 can be defined not by a static mixer but by a dynamic mixer, i.e. a mixer provided with mixing elements that are moved during operation.

In addition, the heat exchanger 6 can be defined inside a cascade extruder or a planetary extruder, in particular arranged immediately downstream of the extruder device that melts and extrudes the polymeric material.

The heat exchanger 6 could also be defined inside a suitably conditioned twin-screw extruder.

In theory, the heat exchanger 6 could be defined within the same melting device 2 that melts the polymeric material, which could be provided with an end part configured to cool the melted polymeric material.

In general, the entire section of the apparatus 1 interposed between the melting device 2 and the severing device 8 can be thermally conditioned so as to cool the polymeric material. In this case, the cooling zone starts immediately downstream of the point at which the polymeric material is melted and continues up to the nozzle 9.

Alternatively, the cooling zone can affect only a portion of the apparatus 1 arranged downstream of the point in which the polymeric material is melted. In this case, the cooling zone ends upstream of the nozzle 9, and between the cooling zone and the nozzle 9 a maintenance zone is interposed in which temperature of the polymeric material is maintained at desired values.

In this case, temperature of the polymeric material in the maintenance zone arranged downstream of the cooling zone can be comprised, or substantially comprised, between the crystallization temperature T_{C} and the melting temperature T_{F}. With the term "substantially comprised" it is meant that at least 90% of the polymeric material has a temperature in the range comprised between the crystallization temperature T_{C} and the melting temperature T_{F}. Small portions of polymeric material can however have a temperature higher than the melting temperature T_{F}, particularly near the surface of the polymeric material that flows in contact with the walls of the apparatus 1.

In the depicted example, reference was made to a situation in which the dose is shaped between a female forming element and a male forming element belonging to the mould, i.e. the female element 13 and the male element 14.

It can further happen that the dose is shaped in contact with an object which is not integrated in the mould, although it behaves like a moulding element while the dose is being formed. This is what happens, for example, in the case of the so called lining, in which the dose is shaped so as to form a liner inside a previously formed cap. More generally, the dose may be moulded inside the cavity of an object, so as to form a component anchored to the object.

In this case, the cap or, more broadly, the object provided with a cavity inside which the dose is shaped, acts as a female forming element, whereas the male forming element is integrated in the mould. In addition to the male forming element, the mould also comprises in this example a support element facing the male forming element and suitable for supporting the object inside which the dose has to be shaped during moulding.

In broad terms, it can therefore be stated that the mould comprises a male forming element and an opposite element facing the male forming element. The opposite element may be a female forming element or, alternatively, a support element for supporting an object inside which the dose is shaped.

What was previously described with reference to the embodiment in which the female forming element is a part of the mould, is to be understood also as referring to an embodiment in which the dose is shaped inside of an object which is not integrated in the apparatus 1 and which acts as a female forming element.

In the preceding description, reference was made to an apparatus and to a method for producing an object by compression moulding. The apparatus and the method according to the invention can indeed also be used for producing an object by means of injection moulding or injection-compression moulding.

In addition, instead of using an apparatus comprising a plurality of moulds mounted on the moulding carousel 12, it is possible to use a plurality of moulds mounted according to an arrangement different from a carousel, or an apparatus provided with a single mould, as occurs in the so-called "single-impression" machines.

## Claims

1. An apparatus for producing an object from a polymeric material having a melting temperature (T_{F}), comprising:
- a melting device (2) for melting the polymeric material;
- a heat exchanger (6) for cooling a flow of polymeric material melted by the melting device (2) below the melting temperature (T_{F});
- a nozzle (9);
- a severing device (8) for severing doses of polymeric material from the flow of polymeric material exiting from the nozzle (9);
- a mould arranged downstream of the heat exchanger (6), the mould being configured for forming the object from a dose of the polymeric material which has been severed by the severing device (8), while the polymeric material has a temperature lower than said melting temperature (T_{F}),
wherein the heat exchanger (6) is provided downstream of the melting device (2) and the nozzle (9) is arranged downstream of the heat exchanger (6), and
wherein the apparatus further comprises a heat recovery device (16) associated with the heat exchanger (6), the heat recovery device (16) being configured to recover at least part of the heat released by the polymeric material to the heat exchanger (6), **characterized in that** the heat recovery device (16) is configured for making the recovered heat available for further use in said apparatus (1).

2. An apparatus according to claim 1, wherein the heat recovery device (16) comprises a recovery heat exchanger for subtracting heat to a conditioning fluid circulating in said heat exchanger (6) in order to recover, from the conditioning fluid, at least part of the heat received by the conditioning fluid from the polymeric material in said heat exchanger (6).

3. An apparatus according to any preceding claim, wherein the heat recovery device (16) is configured for releasing the recovered heat to the polymeric material before the polymeric material is melted in the melting device (2), so as to reduce the amount of energy that needs to be provided from the outside to the melting device (2), in order to melt the polymeric material.

4. An apparatus according to any preceding claim, wherein the heat recovery device (16) is connected with a preheating device (20) for preheating granules of said polymeric material upstream of the melting device (2).

5. An apparatus according to claim 4, wherein the preheating device (20) is configured for acting on a feeding container (4) intended for feeding said granules to the melting device (2).

6. An apparatus according to any one of claims 1 to 3, wherein the heat recovery device (16) is connected to the melting device (2), so that the recovered heat is released to the polymeric material in the melting device (2).

7. An apparatus according to any one of claims 1 to 3, wherein the heat recovery device (16) is associated with a cogeneration device or a heat pump.

8. An apparatus according to any preceding claim, wherein the mould is configured for compression moulding the object from the dose of polymeric material, that has been severed from the flow of polymeric material coming from the heat exchanger (6).

9. A method for producing an object from a polymeric material having a melting temperature (T_{F}), comprising the steps of:
- melting the polymeric material in a melting device (2),
- cooling a flow of polymeric material melted by the melting device (2) below the melting temperature (T_{F}) in a heat exchanger (6),
- severing doses of polymeric material from the flow of polymeric material exiting from a nozzle (9);
- forming the object from a dose of polymeric material severed from the flow of polymeric material exiting from the nozzle (9), the step of forming the object being carried out while the polymeric material has a temperature lower than said melting temperature (T_{F}),
wherein the heat exchanger (6) is arranged downstream of the melting device (6) and the nozzle (9) is arranged downstream of the heat exchanger (6),
**characterized in that** at least part of the heat released by the polymeric material during said step of cooling the melted polymeric material in the heat exchanger (6), is recovered and made available for further use internally of said apparatus (1).

10. A method according to claim 9, wherein the recovered heat is used for pre-heating the polymeric material prior to the step of melting the polymeric material.

11. A method according to claim 9, wherein the recovered heat is used to melt the polymeric material.

## Patentansprüche

1. Vorrichtung zur Herstellung eines Gegenstandes aus einem Polymermaterial, das eine Schmelztemperatur (T_{F}) aufweist, umfassend:
- eine Schmelzvorrichtung (2) zum Schmelzen des Polymermaterials;
- einen Wärmetauscher (6) zum Abkühlen eines von der Schmelzvorrichtung (2) geschmolzenen Polymermaterialstroms unter die Schmelztemperatur (T_{F});
- eine Düse (9);
- eine Trennvorrichtung (8) zum Abtrennen von Polymermaterialdosen von dem aus der Düse (9) austretenden Polymermaterialstrom;
- eine Form, die stromabwärts von dem Wärmetauscher (6) angeordnet ist, wobei die Form dafür ausgelegt ist, den Gegenstand aus einer Dosis des Polymermaterials zu formen, die von der Trennvorrichtung (8) abgetrennt wurde, während das Polymermaterial eine Temperatur aufweist, die unterhalb der genannten Schmelztemperatur (T_{F}) liegt,
wobei der Wärmetauscher (6) stromabwärts von der Schmelzvorrichtung (2) vorgesehen ist, und die Düse (9) stromabwärts von dem Wärmetauscher (6) angeordnet ist, und
worin die Vorrichtung ferner eine Wärmerückgewinnungsvorrichtung (16) umfasst, die mit dem Wärmetauscher (6) verbunden ist, wobei die Wärmerückgewinnungsvorrichtung (16) dafür ausgelegt ist, zumindest einen Teil der von dem Polymermaterial an den Wärmetauscher (6) abgegebenen Wärme zurückzugewinnen, **dadurch gekennzeichnet, dass** die Wärmerückgewinnungsvorrichtung (16) dafür ausgelegt ist, die zurückgewonnene Wärme für eine weitere Verwendung in der Vorrichtung (1) zur Verfügung zu stellen.

2. Vorrichtung nach Anspruch 1, wobei die Wärmerückgewinnungsvorrichtung (16) einen Rückgewinnungswärmetauscher umfasst, der dazu dient, einem in dem Wärmetauscher (6) umlaufenden Konditionierungsfluid Wärme zu entziehen, um von dem Konditionierungsfluid zumindest einen Teil der Wärme zurückzugewinnen, die das Konditionierungsfluid von dem Polymermaterial in dem Wärmetauscher (6) aufgenommen hat.

3. Vorrichtung nach einem der vorhergehenden Ansprüche, wobei die Wärmerückgewinnungsvorrichtung (16) dafür ausgelegt ist, die zurückgewonnene Wärme an das Polymermaterial abzugeben, bevor das Polymermaterial in der Schmelzvorrichtung (2) geschmolzen wird, um so die Energiemenge zu reduzieren, die der Schmelzvorrichtung (2) von außen zugeführt werden muss, um das Polymermaterial zu schmelzen.

4. Vorrichtung nach einem der vorhergehenden Ansprüche, wobei die Wärmerückgewinnungsvorrichtung (16) mit einer Vorheizvorrichtung (20) verbunden ist, um Granulatkörnchen des Polymermaterials stromaufwärts von der Schmelzvorrichtung (2) vorzuheizen.

5. Vorrichtung nach Anspruch 4, wobei die Vorheizvorrichtung (20) dafür ausgelegt ist, auf einen Zuführbehälter (4) zu wirken, der für die Zuführung der Granulatkörnchen zu der Schmelzvorrichtung (2) vorgesehen ist.

6. Vorrichtung nach einem der Ansprüche 1 bis 3, wobei die Wärmerückgewinnungsvorrichtung (16) mit der Schmelzvorrichtung (2) verbunden ist, so dass die zurückgewonnene Wärme in der Schmelzvorrichtung (2) an das Polymermaterial abgegeben wird.

7. Vorrichtung nach einem der Ansprüche 1 bis 3, wobei die Wärmerückgewinnungsvorrichtung (16) mit einer Kraft-Wärme-Kopplungsvorrichtung oder einer Wärmepumpe verbunden ist.

8. Vorrichtung nach einem der vorhergehenden Ansprüche, wobei die Form zum Formpressen des Gegenstands aus einer Dosis des Polymermaterials ausgelegt ist, die von dem aus dem Wärmetauscher (6) kommenden Polymermaterialstrom abgetrennt wurde.

9. Verfahren zur Herstellung eines Gegenstandes aus einem Polymermaterial mit einer Schmelztemperatur (T_{F}), das die folgenden Schritte umfasst:
- Schmelzen des Polymermaterials in einer Schmelzvorrichtung (2),
- Abkühlen eines von der Schmelzvorrichtung (2) geschmolzenen Polymermaterialstroms unter die Schmelztemperatur (T_{F}) in einem Wärmetauscher (6),
- Abtrennen von Polymermaterialdosen von dem aus einer Düse (9) austretenden Polymermaterialstrom;
- Formen des Gegenstands aus einer Dosis des Polymermaterials, die von dem aus der Düse (9) austretenden Polymermaterialstrom abgetrennt wurde, wobei der Schritt des Formens des Gegenstands durchgeführt wird, während das Polymermaterial eine Temperatur aufweist, die unterhalb der genannten Schmelztemperatur (T_{F}) liegt,
wobei der Wärmetauscher (6) stromabwärts von der Schmelzvorrichtung (6) angeordnet ist und die Düse (9) stromabwärts von dem Wärmetauscher (6) angeordnet ist,
**dadurch gekennzeichnet, dass** zumindest ein Teil der von dem Polymermaterial während des Schritts des Abkühlens des geschmolzenen Polymermaterials in dem Wärmetauscher (6) abgegebenen Wärme zurückgewonnen wird und für eine weitere Verwendung innerhalb der Vorrichtung (1) zur Verfügung gestellt wird.

10. Verfahren nach Anspruch 9, wobei die zurückgewonnene Wärme zum Vorheizen des Polymermaterials vor dem Schritt des Schmelzens des Polymermaterials verwendet wird.

11. Verfahren nach Anspruch 9, wobei die zurückgewonnene Wärme zum Schmelzen des Polymermaterials verwendet wird.

## Revendications

1. . Appareil pour produire un objet à partir d'un matériau polymère ayant une température de fusion (T_{F}), comprenant :
- un dispositif de fusion (2) pour fondre le matériau polymère ;
- un échangeur de chaleur (6) pour refroidir un flux de matériau polymère fondu par le dispositif de fusion (2) en dessous de la température de fusion (T_{F}) ;
- une buse (9) ;
- un dispositif de séparation (8) pour séparer des doses de matériau polymère du flux de matériau polymère sortant de la buse (9) ;
- un moule disposé en aval de l'échangeur de chaleur (6), le moule étant configuré pour former l'objet à partir d'une dose du matériau polymère qui a été séparée par le dispositif de séparation (8), alors que le matériau polymère a une température inférieure à ladite température de fusion (T_{F}),
dans lequel l'échangeur de chaleur (6) est prévu en aval du dispositif de fusion (2) et la buse (9) est disposée en aval de l'échangeur de chaleur (6), et
dans lequel l'appareil comprend en outre un dispositif de récupération de chaleur (16) associé avec l'échangeur de chaleur (6), le dispositif de récupération de chaleur (16) étant configuré pour récupérer au moins une partie de la chaleur cédée par le matériau polymère à l'échangeur de chaleur (6), **caractérisé en ce que** le dispositif de récupération de chaleur (16) est configuré pour rendre la chaleur récupérée disponible pour un autre usage dans ledit appareil (1).

2. . Appareil selon la revendication 1, dans lequel le dispositif de récupération de chaleur (16) comprend un échangeur de chaleur de récupération pour soustraire de la chaleur à un fluide de conditionnement circulant dans ledit échangeur de chaleur (6) de manière à récupérer, du fluide de conditionnement, au moins une partie de la chaleur reçue par le fluide de conditionnement à partir du matériau polymère dans ledit échangeur de chaleur (6).

3. . Appareil selon l'une quelconque des revendications précédentes, dans lequel le dispositif de récupération de chaleur (16) est configuré pour céder la chaleur récupérée au matériau polymère avant que le matériau polymère soit fondu dans le dispositif de fusion (2), de manière à réduire la quantité d'énergie qui doit être fournie de l'extérieur au dispositif de fusion (2), afin de fondre le matériau polymère.

4. . Appareil selon l'une quelconque des revendications précédentes, dans lequel le dispositif de récupération de chaleur (16) est relié à un dispositif de préchauffage (20) pour préchauffer des granulés dudit matériau polymère en amont du dispositif de fusion (2).

5. . Appareil selon la revendication 4, dans lequel le dispositif de préchauffage (20) est configuré pour agir sur un récipient d'alimentation (4) destiné à alimenter lesdits granulés vers le dispositif de fusion (2).

6. . Appareil selon l'une quelconque des revendications de 1 à 3, dans lequel le dispositif de récupération de chaleur (16) est relié au dispositif de fusion (2), de manière à ce que la chaleur récupérée soit cédée au matériau polymère dans le dispositif de fusion (2).

7. Appareil selon l'une quelconque des revendications de 1 à 3, dans lequel le dispositif de récupération de chaleur (16) est associé à un dispositif de cogénération ou à une pompe à chaleur.

8. . Appareil selon l'une quelconque des revendications précédentes, dans lequel le moule est configuré pour mouler par compression l'objet à partir de la dose de matériau polymère, qui a été séparée du flux de matériau polymère provenant de l'échangeur de chaleur (6).

9. . Procédé pour produire un objet à partir d'un matériau polymère ayant une température de fusion (T_{F}), comprenant les étapes consistant à :
- fondre le matériau polymère dans un dispositif de fusion (2),
- refroidir un flux de matériau polymère fondu par le dispositif de fusion (2) en dessous de la température de fusion (T_{F}) dans un échangeur de chaleur (6),
- séparer des doses de matériau polymère à partir du flux de matériau polymère sortant d'une buse (9) ;
- former l'objet à partir d'une dose de matériau polymère séparée du flux de matériau polymère sortant de la buse (9), l'étape consistant à former l'objet étant effectuée alors que le matériau polymère a une température en dessous de ladite température de fusion (T_{F}),
dans lequel l'échangeur de chaleur (6) est disposé en aval du dispositif de fusion (6) et la buse (9) est disposée en aval de l'échangeur de chaleur (6),
**caractérisé en ce qu'**au moins une partie de la chaleur cédée par le matériau polymère au cours de l'étape de refroidissement du matériau polymère fondu dans l'échangeur de chaleur (6), est récupérée et rendue disponible pour un autre usage à l'intérieur dudit appareil (1).

10. . Procédé selon la revendication 9, dans lequel la chaleur récupérée est utilisée pour préchauffer le matériau polymère avant l'étape de fusion du matériau polymère.

11. . Procédé selon la revendication 9, dans lequel la chaleur récupérée est utilisée pour fondre le matériau polymère.
